# EUROPÄISCHE PATENTSCHRIFT

(11) **EP 2 595 820 B1**
(45) Veröffentlichungstag und Bekanntmachung des Hinweises auf die Patenterteilung: **18.01.2017**
(21) Anmeldenummer: 11720495.8
(22) Anmeldetag: 19.05.2011
(51) Int. Cl.: B60C 11/03, B60C 11/13

(54) **LAUFSTREIFENPROFIL EINES FAHRZEUGLUFTREIFENS**
TREAD PROFILE OF A PNEUMATIC VEHICLE TIRE
PROFIL DE BANDE DE ROULEMENT D'UN PNEUMATIQUE DE VÉHICULE

(30) Priorität: 21.07.2010 DE 102010036548
(43) Veröffentlichungstag der Anmeldung: 29.05.2013
(73) Patentinhaber: Continental Reifen Deutschland GmbH, 30165 Hannover (DE)
(72) Erfinder: BOGENSCHÜTZ, Peter, 30900 Wedemark (DE); BEHR, Ulrich, 30169 Hannover (DE)
(74) Vertreter: Finger, Karsten
(86) Internationale Anmeldenummer: PCT/EP2011/058132
(87) Internationale Veröffentlichungsnummer: WO 2012/010342

(56) Entgegenhaltungen:
- EP-A1- 1 685 981
- WO-A1-2006/007877
- WO-A1-2009/004408

## Beschreibung

Die Erfindung betrifft ein Laufstreifenprofil eines Fahrzeugluftreifens mit wenigstens einer im Erstreckungsbereich einer Reifenschulter ausgebildeten, in Umfangsrichtung U des Fahrzeugluftreifens erstreckten Profilblockreihe, welche in axialer Richtung zur Reifenäquatorebene hin durch eine Umfangsrille begrenzt und aus in Umfangsrichtung U hintereinander angeordneten, durch in die Umfangsrille mündende Querrillen voneinander beabstandeten Profilblockelementen ausgebildet ist, die nach radial außen durch eine nach radial außen weisende, die Straßenkontaktoberfläche bildende Oberfläche begrenzt werden.

Derartige Fahrzeugluftreifen sind bekannt. Die in die Umfangsrille einmündenden Querrillen dienen der Aufnahme und der Ableitung von Wasser. Zusammen mit den Umfangsrillen sollen sie somit u. a. gute Aquaplaning-Eigenschaften ermöglichen. Dies ist gerade bei PKW-Reifen, welche gegenüber Nutzfahrzeugreifen für deutlich höhere Geschwindigkeiten ausgelegt werden, ein wichtiges Auslegungskriterium. Beim Durchlaufen des Reifenlatsches werden Geräusche erzeugt, die durch die Querrillen nach außen abgeleitet werden, wodurch ein für den außenstehenden Betrachter störendes Geräusch wahrnehmbar ist.

Es ist bekannt, zur Versteifung von Profilblockreihen in Umfangsrichtung des Reifens stegförmige Erhöhungen im Rillengrund auszubilden, welche sich in Umfangsrichtung erstrecken und die Profilblockelemente in Umfangsrichtung versteifend miteinander verbinden. Zur Begrenzung der versteifenden Wirkung und zur Ermöglichung des Wasserablaufes werden derartige Stege üblicherweise nur als geringe Erhöhung des Rillengrundes ausgebildet, die mit deutlichem Abstand zur radial äußeren Oberfläche der durch die Querrille von einander getrennten Profilblockelemente enden. Darüber hinaus werden diese Stege nur mit geringer Höhe ausgebildet, um die Umfangsteifigkeit nur begrenzt zu erhöhen. Bei großer Erhöhung der Umfangssteifigkeit wird die Anpassung der Profilblockreihe beim Durchlaufen des Reifenlatsches in seiner zur Erzeugung eines optimalen Footprints erforderlichen Anpassungsbeweglichkeit stark beschränkt. Dies kann sich negativ auf die Handlingeigenschaften eines Fahrzeuges auswirken, was gerade bei PKW-Fahrzeugluftreifen, bei denen gute Handlingseigenschaften auch bei höheren Geschwindigkeiten ermöglicht werden sollen, einer optimierten Auslegung entgegenstehen kann.

Bei Nutzfahrzeugreifen ist es beispielsweise aus der US 2006/0254684 A1 bekannt, zur Verhinderung der Geräuschemission in Querrillen der Schulterblockreihe unmittelbar oder nahe bei ihrer Einmündung in eine Umfangsrille einen dünnen in Umfangsrichtung U ausgerichteten Steg auszubilden, welcher sich in radialer Richtung bis zu der den Reifen nach außen begrenzenden Oberfläche erstreckt. Hierdurch wird zwar eine Geräuschemission reduziert aber unter nahezu vollständiger Blockade jeglicher Aufnahme von Wasser aus der Umfangsrille in die Querrillen. Gerade bei Fahrzeugluftreifen, die im Einsatz mit Aquaplaning-Risiken konfrontiert werden können - was bei modernen PKW-Reifen häufig der Fall ist-, wird hierdurch die wichtige Aquaplaning-Eigenschaft deutlich verschlechtert. Die Stege sind bei der aus der US2006/0254684A1 bekannten Ausbildung eines Nutzfahrzeugreifen sehr nahe an der Umfangsrille und somit relativ weit von der Grenze der Bodenaufstandsfläche entfernt positioniert und über den gesamten radialen Erstreckungsbereich des Profiles mit im Wesentlichen gleichbleibender Dicke erstreckt. Die Stege sind somit mit einer hohen in Umfangsrichtung U versteifenden Wirkung ausgebildet, die sich in einem besonders kritischen Bereich unmittelbar neben der Umfangsrille sehr negativ auf die Anpassungsfähigkeit der Schulterprofilblockreihe beim Durchlaufen des Reifenlatsches und somit auf einen optimalen Footprint auswirkt. Hierdurch werden gerade Fahrzeugluftreifen, die für gute Handlingeigenschaften auch bei hohen Geschwindigkeiten ausgelegt werden sollen- was bei modernen PKW-Reifen häufig der Fall ist-, in ihrer optimalen Auslegung beschränkt.

Aus der WO 2009/004408 A1 ist ein Laufstreifenprofil eines Fahrzeugluftreifens gemäß den Merkmalen des Oberbegriffs von Anspruch 1 bekannt

Der Erfindung liegt die Aufgabe zugrunde, mit einfacher Weise einen derartigen Fahrzeugluftreifen zu schaffen, bei dem eine gute Geräuschdämpfung und gute Aquaplaningeigenschaften bei ausreichend hoher Flexibilität der Reifenschulter zur Ausbildung eines optimalen Footprints ermöglicht wird.

Die Aufgabe wird erfindungsgemäß durch die Ausbildung eines Laufstreifenprofils eines Fahrzeugluftreifens mit wenigstens einer im Erstreckungsbereich einer Reifenschulter ausgebildeten, in Umfangsrichtung U des Fahrzeugluftreifens erstreckten Profilblockreihe, welche in axialer Richtung A zur Reifenäquatorebene hin durch eine Umfangsrille begrenzt und aus in Umfangsrichtung U hintereinander angeordneten, durch in die Umfangsrille mündende Querrillen voneinander beabstandeten Profilblockelementen ausgebildet ist, die nach radial außen durch eine nach radial außen weisende, die Straßenkontaktoberfläche bildende Oberfläche begrenzt werden, bei dem wenigstens in mehreren - insbesondere in allen - dieser Querrillen jeweils innerhalb des in axialer Richtung A mittleren Drittels des innerhalb der Bodenaufstandsbreite T_{A} des Fahrzeugluftreifens ausgebildeten axialen Erstreckungsbereichs der Querrille jeweils ein Steg ausgebildet ist, der sich quer zur Querrille durch diese hindurch erstreckt und die beiden durch die Querrille voneinander getrennten Profilblockelemente miteinander verbindet, wobei sich der Steg ausgehend von dem die Querrille nach radial innen begrenzenden Rillengrund nach radial außen bis zur radialen Position der durch die die beiden Profilblockelemente nach radial außen begrenzenden Oberflächen gebildeten Mantelfläche unter kontinuierlicher Verjüngung der Stegbreite erstreckt und dort endet, gemäß den Merkmalen von Anspruch 1 gelöst, bei dem die Stegbreite b₁ in der radialen Position durch die die beiden Profilblockelemente nach radial außen begrenzenden Oberflächen gebildeten Mantelfläche mit b₁ ≤ 0,8 B ausgebildet ist, wobei B die Breite der Querrille beiderseits des Steges in der radialen Position der die beiden Profilblockelemente nach radial außen begrenzenden Oberfläche bildet.

Durch diese Ausbildung wird eine optimale Dämpfung der Geräuschemission ermöglicht, wobei die Positionierung des Steges im mittleren Erstreckungsbereich der Querrillen ausreichend Aufnahmekapazität der Querrillen zur Aufnahme von Wasser beim Durchlaufen des Reifenlatsches ermöglicht zur Erzielung guter Aquaplaning-Eigenschaften. Die Ausbildung des Steges mit in radialer Richtung kontinuierlich verjüngter Stegbreite in einer Position im mittleren axialen Erstreckungsbereich der Querrille innerhalb der Bodenaufstandsfläche bewirkt eine deutlich beschränkte Umfangsversteifung, und zwar in einem für die Anpassungsbewegung der Profilblockreihe beim Durchlaufen des Reifenlatsches zur Erzielung eines optimalen Footprints wenig kritischen Erstreckungsbereich. Die Profilblockreihe kann mit ihren Profilblockelementen hierdurch beim Durchlaufen des Reifenlatsches die zur Erzielung eines optimalen Footprints notwendigen Bewegungen ausführen trotz Ausbildung des versteifenden Steges. Die Positionierung des Steges im mittleren axialen Erstreckungsbereich ist nahe genug an der axialen Außengrenze der Bodenaufstandsfläche, um einen größtmöglichen Anteil der beim Durchlaufen des Reifenlatsches im Profilbereich entstehenden Geräusche an ihrer Emission zu behindern und weit genug entfernt um diese Geräusche noch sicherer und effizient zu dämpfen. Darüber hinaus können im Bereich der Querrillen lange Querkanten und somit hohe Nassgriffwirkung sicher beibehalten werden. Durch diese Ausbildung wird in einfacher, optimierter Weise eine ausreichend geringe Umfangsversteifung des Laufstreifenprofils durch den Steg bei ausreichender Stabilität des Steges selbst ermöglicht.

Besonders vorteilhaft ist die Ausbildung gemäß den Merkmalen von Anspruch 2, wobei der Steg zur einen Erstreckungsseite der Querrille hin durch eine erste Stegflanke und zur anderen Erstreckungsseite der Querrille hin durch eine zweite Stegflanke begrenzt wird, wobei sich beide Stegflanken jeweils in Richtung quer zur Querrille vom einen Profilblockelement zum anderen Profilblockelement und in radialer Richtung ausgehend vom Rillengrund bis zu der durch die die beiden Profilblockelemente nach radial außen begrenzenden Oberflächen gebildeten Mantelfläche unter konstanter Abnahme ihres Abstandes zueinander erstrecken. Hierdurch kann in einfacher Weise zuverlässig eine definierte, deutlich beschränkte Umfangsversteifung in einem für die Anpassungsbewegung der Profilblockreihe beim Durchlaufen des Reifenlatsches zur Erzielung eines optimalen Footprints wenig kritischen Erstreckungsbereich ermöglicht werden. Die Profilblockreihe kann hierdurch mit ihren Profilblockelementen beim Durchlaufen des Reifenlatsches die zur Erzielung eines optimalen Footprints notwendigen Bewegungen trotz Ausbildung des versteifenden Steges ausführen. Die Positionierung des Steges im mittleren axialen Erstreckungsbereich ist nahe genug an der axialen Außengrenze der Bodenaufstandsfläche, um einen größtmöglichen Anteil der beim Durchlaufen des Reifenlatsches im Profilbereich entstehenden Geräusche an ihrer Emission zu behindern und weit genug entfernt um diese Geräusche noch sicherer und effizient zu dämpfen. Darüber hinaus können im Bereich der Querrillen lange Querkanten und somit hohe Nassgriffwirkung sicher beibehalten werden.

Besonders vorteilhaft ist die Ausbildung gemäß den Merkmalen von Anspruch 3, wobei die erste Stegflanke jeweils in den senkrecht zu der in Erstreckungsrichtung des Steges von Profilblockelement zu Profilblockelement ausgebildeten Schnittebenen einen Neigungswinkel β₁ mit 5°≤ β₁<20° und die zweite Stegflanke jeweils in den senkrecht zu der in Erstreckungsrichtung des Steges von Profilblockelement zu Profilblockelement ausgebildeten Schnittebenen einen Neigungswinkel β₂ mit 5°≤ β₂≤20° zu einer in der jeweiligen Schnittebene an die durch die radial äußeren Oberflächen der beiden Profilblockelemente gebildeten Mantelfläche ausgebildeten Senkrechten, aufweist, wobei insbesondere β₁= β₂ ausgebildet ist. Hierdurch wird in einfacher, optimierter Weise eine ausreichend geringe Umfangsversteifung des Laufstreifenprofils durch den Steg bei ausreichender Stabilität des Steges selbst ermöglicht.

Besonders vorteilhaft ist die Ausbildung gemäß den Merkmalen von Anspruch 4, wobei der Steg über seine gesamte radiale Erstreckung hinweg mit seiner von Profilblockelement zu Profilblockelement ausgebildeten Haupterstreckung durch die Querrille hindurch unter Einschluss eines Winkels α mit 30°≤α≤ 60° zur Umfangsrichtung U des Fahrzeugluftreifens verlaufend ausgebildet ist. Durch diese Ausbildung des Winkels α kann in einfacher Weise die ungewünscht hohe Umfangsversteifung zusätzlich reduziert werden ohne Reduktion der Eigenstabilität des Steges.

Besonders vorteilhaft ist die Ausbildung gemäß den Merkmalen von Anspruch 5, wobei der Steg in der Querrille in einer Position einer - insbesondere der einzigen - Knickstelle des Verlaufs der Querrille ausgebildet ist. Hierdurch wird die Aufschlagenergie beim Eintritt in den Reifenlatsch und somit die Geräuschbildung weiter reduziert.

Besonders vorteilhaft ist die Ausbildung gemäß den Merkmalen von Anspruch 6, wobei der Rillengrund der Querrille in dem in axialer Richtung A des Fahrzeugluftreifens vom Steg zur Reifenäquatorebene hinweisend ausgebildeten Erstreckungsabschnitt in einer gegenüber dem Rillengrund indem in axialer Richtung A des Fahrzeugluftreifens vom Steg aus von der Reifenäquatorebene wegweisend ausgebildeten Erstreckungsabschnitt erhöhten radialen Position ausgebildet ist. Dies ermöglicht trotz Nutzung der Vorteile des Steges in der Querrille mit reduzierter Geräuschemission, guter Aquaplaning-Eigenschaft, gutem Nassgriff und der für den optimalen Footprint beim Durchlaufen des Reifenlatsches gewünschten Flexibilität eine nur im Nahbereich der Umfangsrille im Profilgrund bewirkte gezielte zusätzliche Umfangssteifigkeit zur weiteren Verbesserung der HandlingEigenschaften des Fahrzeugluftreifens.

Die Erfindung wird im Folgenden an Hand der in den Figuren 1 bis 9 schematisch dargestellten Ausführungsbeispielen näher erläutert. Dabei zeigen
- Fig.1: einen Umfangsabschnitt eines Laufstreifenprofilabschnitts in Draufsicht,
- Fig.2: das Laufstreifenprofil von Fig.1 in Schnittdarstellung gemäß Schnitt II-II von Fig.1,
- Fig.3: einen Umfangsabschnitt eines Laufstreifenprofilabschnitts in alternativer Ausführung in Draufsicht,
- Fig.4: das Laufstreifenprofil von Fig.3 in Schnittdarstellung gemäß Schnitt IV-IV von Fig.3,
- Fig.5: einen Umfangsabschnitt eines Laufstreifenprofils in weiterer alternativer Ausbildung in Draufsicht,
- Fig.6: das Laufstreifenprofil von Fig.5 in Schnittdarstellung gemäß Schnitt VI-VI von Fig.5,
- Fig.7: einen Umfangsabschnitt eines Laufstreifenprofils in weiterer alternativer Ausführung in Draufsicht,
- Fig.8: das Laufstreifenprofil von Fig.7 in Schnittdarstellung gemäß Schnitt VIII-VIII von Fig.7 und
- Fig.9: eine perspektivische Darstellung des Laufstreifenprofils von Fig.3 und Fig.4 bei einem Schnitt gemäß Schnitt IX-IX von Fig.3.

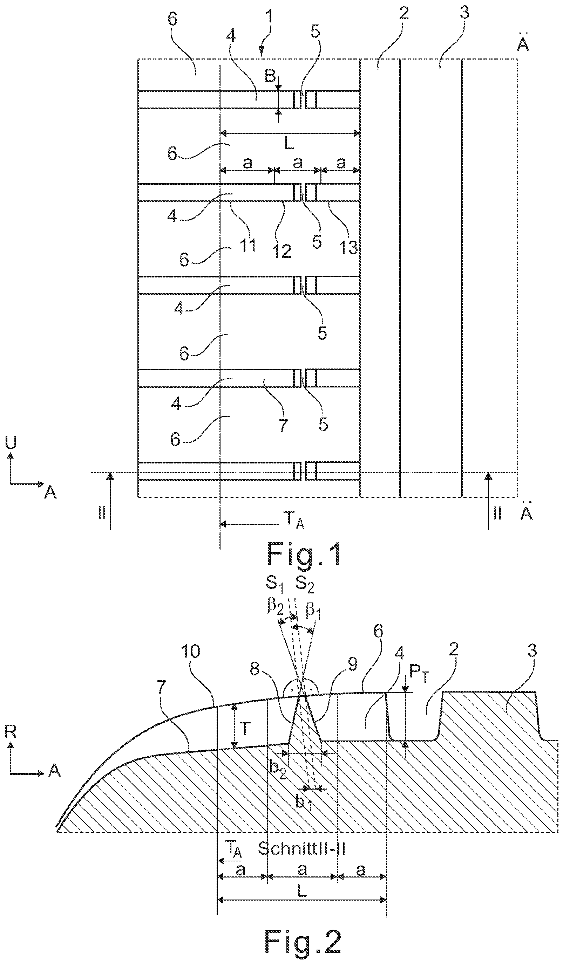

Die Figuren 1 und 2 zeigen in schematischer Darstellung einen Schulterbereich eines Laufstreifenprofils eines Fahrzeugluftreifens für PKW-Reifen. In Fig.1 ist die Äquator-Ebene des Fahrzeugluftreifens mit Ä-Ä schematisch eingezeichnet.

Figur 1 zeigt den auf einer axialen Seite der Äquator-Ebene Ä-Ä ausgebildeten Schulterbereich des Fahrzeugluftreifens. Der Schulterbereich ist mit einer im Bereich der Reifenschulter ausgebildeten über den Umfang des Fahrzeugluftreifens in Umfangsrichtung U erstreckt ausgebildeten Profilblockreihe 1 ausgebildet ist. Die Profilblockreihe 1 ist in Umfangsrichtung U aus einer Vielzahl von in Umfangsrichtung U hintereinander angeordneten und jeweils durch Querrillen 4 voneinander beabstandeten Profilblockelementen 6 ausgebildet. Die Profilblockreihe 1 ist in axialer Richtung A zur Äquator-Ebene Ä-Ä hin von einer in Umfangsrichtung U ausgerichteten und über den gesamten Umfang erstreckten Umfangsrille 2 begrenzt. Die Umfangsrille 2 ist in axialer Richtung A zur Äquatorebene Ä-Ä hin durch ein über den gesamten Umfang des Fahrzeugluftreifens erstreckte in Umfangsrichtung U ausgerichtetes Profilband 3 - beispielsweise eine Profilrippe oder eine weitere Profilblockreihe - begrenzt. Die als Schulterprofilblockreihe ausgebildete Profilblockreihe 1 erstreckt sich mit ihren Profilblockelementen 1 ausgehend von der Umfangsrille 2 in axialer Richtung A weg von der Äquatorebene bis in eine Position außerhalb der Bodenaufstandsbreite T_{A}. Die Querrillen 4 erstrecken sich ausgehend von einer Position außerhalb der Bodenaufstandsbreite T_{A} bis in den Bereich innerhalb der Bodenaufstandsbreite T_{A} und weiter bis zur Umfangsrille 2, in die sie münden.

Die Querrillen 4 sind jeweils in ihrem innerhalb der Bodenaufstandsbreite T_{A} ausgebildeten Erstreckungsbereich der axialen Erstreckungslänge L aus drei in axialer Richtung A nebeneinander angeordneten Erstreckungsbereichen 11, 12, 13 ausgebildet, welche jeweils die gleiche Erstreckungslänge a aufweisen.

Die Profilblockelemente 6 sind in radialer Richtung R des Fahrzeugluftreifens nach außen jeweils durch eine das jeweilige Profilblockelement 6 nach radial außen begrenzende Oberfläche 10 begrenzt. Die Oberflächen 10 sind Teil der Mantelfläche des Reifens und bilden die innerhalb der Bodenaufstandsbreite T_{A} die Straßenkontaktoberfläche der Profilblockelemente 6.

Die Querrillen 4 sind nach radial innen durch einen Rillengrund 7 begrenzt. Jede Querrille 4 ist in Umfangsrichtung U dem Rillengrund 7 vor- und nachgeordnet jeweils durch eine Rillenwand begrenzt, welche sich aus dem Rillengrund 7 in radialer Richtung R des Fahrzeugluftreifens nach außen bis zu der die Straßenkontaktoberfläche bildenden Oberfläche 10 erstreckt und dabei die zur Querrille 4 gebildete Profilblockelementflanke des von der Querrille 4 in Richtung Rillenwand begrenzten Profilblockelements 6 bildet.

Wie in Figur 2 dargestellt ist, ist die Umfangsrille 2 mit der Profiltiefe P_{T} ausgebildet, welche das maximale radiale Erstreckungsmaß der Umfangrille ausgehend vom Rillengrund der Umfangsrille 2 bis zu der durch die Oberflächen 10 bestimmten Mantelfläche bildet. Die Querrille 4 ist längs ihrer Erstreckung mit einer Rillentiefe T ausgebildet, welche jeweils das radiale Erstreckungsmaß vom Rillengrund 7 der Querrille 4 bis zu der durch die Oberflächen 10 der benachbarten Profilblockelemente 6 gebildeten Mantelfläche bildet.

In dem in axialer Richtung A gesehenen mittleren Erstreckungsbereich 12 der drei nebeneinander angeordneten Erstreckungsbereiche 11, 12 und 13 der Querrille 4 ist in jeder Querrille 4 jeweils in gleicher axialer Position ein Steg 5 ausgebildet, welcher sich - ausgehend vom Rillengrund 7 in radialer Richtung R des Fahrzeugluftreifens nach außen bis zu der durch die Oberflächen 10 der durch die Querrille 4 jeweils voneinander getrennten Profilblockelemente 6 gebildeten Mantelfläche erstreckt und dort endet.

Der Steg 5 ist in axialer Richtung A zur Äquatorebene Ä-Ä hin durch eine Stegflanke 9 und in axialer Richtung A von der Äqutorebene Ä-Ä wegweisender Richtung durch eine Stegflanke 8 begrenzt, wobei sich die beiden Stegflanken 8 und 9 jeweils ausgehend vom Rillengrund 7 der Querrille 4 nach radial außen bis zu der radialen Position der durch die Oberflächen 10 der von der Querrille 4 voneinander getrennten Profilblockelemente 6 gebildeten Mantelfläche erstrecken und dort enden. Der Steg 5 erstreckt sich dabei mit seinen Mantelflächen 8 und 9 jeweils ausgehend von dem einen durch die Querrille 4 begrenzten Profilblockelement 6 bis zu dem anderen durch die Querrille 4 begrenzten Profilblockelement 6 geradlinig durch die Querrille 4 hindurch. Der Steg 5 erstreckt sich mit seiner Haupterstreckungsrichtung von Profilblockelement 6 zu Profilblockelement 6 durch die Querrille 4 hindurch.

In den Schnittebenen senkrecht zu der Haupterstreckungsrichtung des Steges 5 schneidet die Flanke 8 die durch die Oberflächen 10 gebildete Mantelfläche in einem Schnittpunkt. In den Schnittebenen senkrecht zu der Haupterstreckungsrichtung des Steges 5 ist die Stegflanke 8 unter einem Winkel β₁ zu der in diesem Schnittpunkt auf die durch die Oberflächen 10 gebildete Mantelfläche gebildeten Senkrechten S₁ geneigt ausgebildet.

In den Schnittebenen senkrecht zu der Haupterstreckungsrichtung des Steges 5 schneidet die Flanke 9 die durch die Oberflächen 10 gebildete Mantelfläche in einem Schnittpunkt. In den Schnittebenen senkrecht zu der Haupterstreckungsrichtung des Steges 5 ist die Stegflanke 9 unter einem Winkel β₂ zu der in diesem Schnittpunkt auf die durch die Oberflächen 10 gebildete Mantelfläche gebildeten Senkrechten S₂ geneigt ausgebildet.

Die Stegflanken 8 und 9 eines Steges 5 sind dabei in ihrer Neigung so gewählt, dass sie längs der radialen Erstreckung des Reifens nach außen hin jeweils in axialer Richtung zueinander geneigt sind.

Die Neigungswinkel β₁ und β₂ sind dabei mit 5° ≤ β₁ ≤ 20° und 5° ≤ β₂ ≤ 20° ausgebildet. Die Winkel β₁ und β₂ werden hierzu im Betriebszustand am unbelasteten montierten Reifen gemessen. Im dargestellten Ausführungsbeispiel ist β₁ = β₂ = 10° gewählt.

Der Steg 5 somit längs seiner radialen Erstreckung nach außen hin ausgehend vom Rillengrund 7 bis zu der durch die Oberflächen 10 ausgebildeten Mantelfläche mit konstant abnehmender Stegbreite b ausgebildet, welche ihr Maximum b₂ im Rillengrund 7 und ihr Minimum b₁ in der radialen Position der Mantelfläche ausweist. Die Stegbreite b wird dabei in den senkrecht zur Haupterstreckungsrichtung des Steges 5 gemessenen Schnittebenen ermittelt. Die Stegbreite b₁ ist mit b₁ ≤ 0,8B ausgebildet, wobei B die in Umfangsrichtung U gemessene Breite der Querrillen 4 zu beiden Seiten des Steges 5 unmittelbar neben dem Steg 5 angibt und ebenfalls in der Mantelfläche gemessen wird. Beispielsweise ist B = 5 mm und b₁ = 1,5 mm gewählt.

Figuren 1 und 2 zeigen ein Ausführungsbeispiel, bei denen die Stege 5 jeweils mit ihrer Haupterstreckungsrichtung in Umfangsrichtung U ausgerichtet sind.

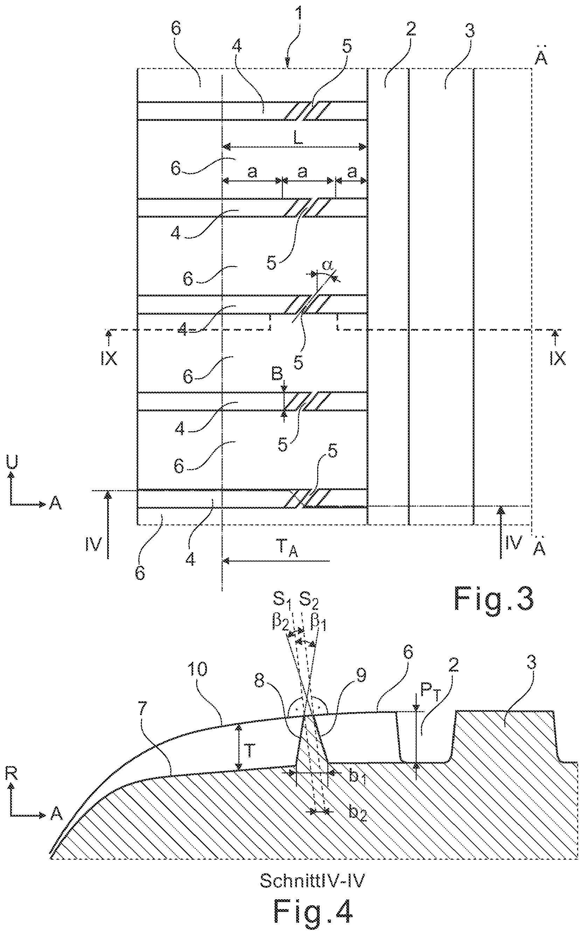

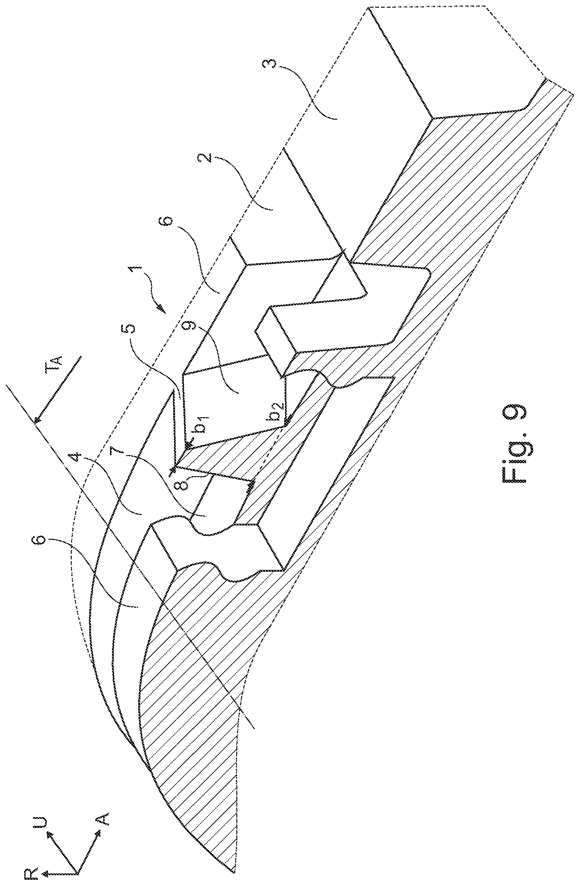

Die Figuren 3, 4 und 9 zeigen ein alternatives Ausführungsbeispiel, bei dem die Stege jeweils mit ihrer Haupterstreckungsrichtung unter einem Winkel α zur Umfangsrichtung U erstreckt ausgebildet sind mit 30° ≤ α ≤ 60°. Im schematisch dargestellten Ausführungsbeispiel ist α = 45° gewählt.

Die Figuren 1 bis 4 und 9 zeigen Ausführungsbeispiele, bei denen die Querrillen 4 jeweils über ihre gesamte Erstreckung innerhalb der Bodenaufstandsbreite T_{A} geradlinig erstreckt ausgebildet sind.

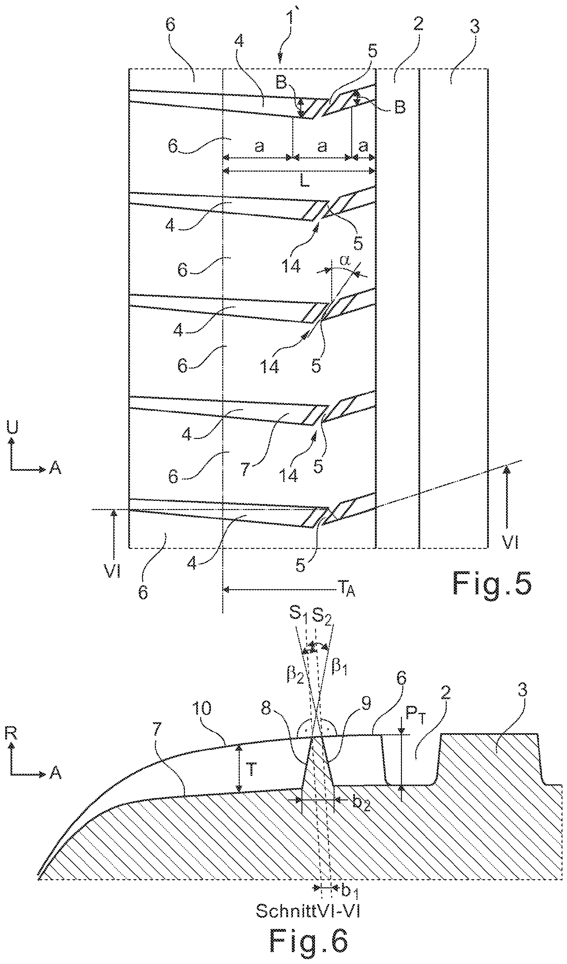

Die Figuren 5 und 6 zeigen ein alternatives Ausführungsbeispiel, bei dem die Querrillen 4 im axialen Erstreckungsbereich der Bodenaufstandsbreite T_{A} im Wesentlichen einen geradlinigen, jedoch mit einer Knickstelle 14 ausgebildeten Verlauf aufweisen. Im dargestellten Ausführungsbeispiel erstrecken sich die Querrillen 4 ausgehend von der Umfangsrille 2 in axialer Richtung A nach außen bis zur Knickstelle 14 mit einer Umfangsrichtungskomponente, welche in der Darstellung von Figur 5 nach unten weist, und ab der Knickstelle 14 in axialer Richtung A nach außen mit einer Umfangsrichtungskomponente, welche in der Darstellung von Figur 5 nach oben weist. In der Position der Knickstelle 14 ist jeweils der Steg 5 ausgebildet. Der Steg 5 ist dabei in einer der bereits vorher beschriebenen und in den Figuren 1 bis 6 dargestellten und hierzu oben erläuterten Ausführungen ausgebildet.

In Figur 5 ist ein Ausführungsbeispiel des Steges 5 - wie im Zusammenhang mit den Figuren 3, 4 und 9 erläuterten - dargestellt unter Einschluss eines Winkels α zur Umfangsrichtung U erstreckt verlaufend ausgebildet. Dabei bildet jeweils die Schnittposition des Steges 5 mit der jeweiligen Rillenwand die Position des Knickes der Rillenwand.

In den Figuren 1 bis 6 ist jeweils die Querrille 4 mit einem Rillengrund 7 ausgebildet, welcher sich auf der zur Umfangsrille 2 hinweisenden axialen Erstreckungsseite im gleichen radialen Niveau befindet wie auf der von der Umfangsrille 2 wegweisenden axialen Erstreckungsseite der Querrille vom Steg 5 ausgesehen.

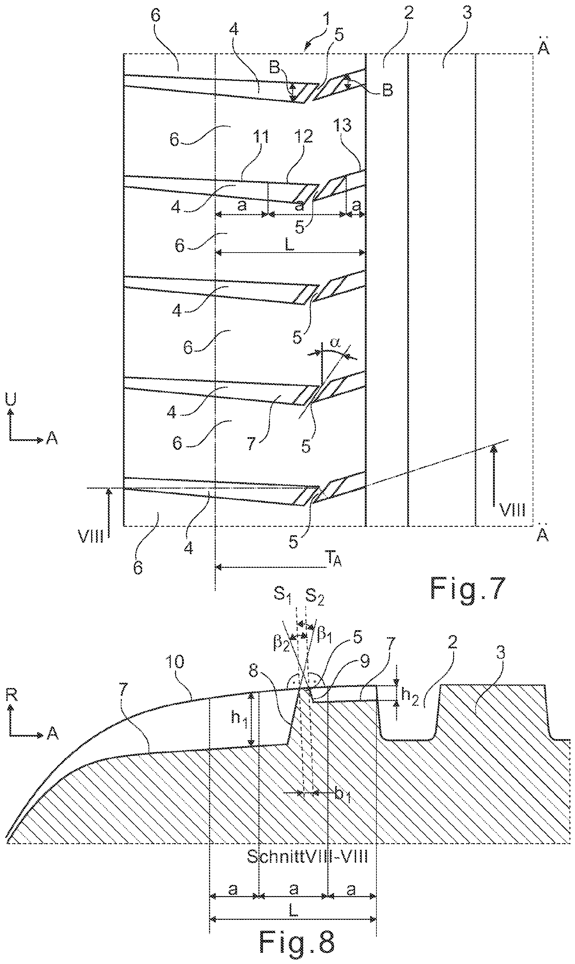

Die Figuren 7 und 8 zeigen ein Ausführungsbeispiel, bei dem der Rillengrund 7 auf der zur Umfangsrille 2 hinweisenden axialen Erstreckungsseite des Steges 5 eine Rillentiefe des Maßes h₂ aufweist, während sie auf der von der Umfangsrille 2 wegweisenden axialen Erstreckungsseite des Steges 5 eine Rillentiefe des Maßes h₁ aufweist mit h₁ > h₂. In diesem Ausführungsbeispiel ist somit der Rillengrund 7 auf der zur Umfangsrille 2 hinweisenden axialen Erstreckungsseite der Querrille 4 gegenüber dem Rillengrund 7 auf der von der Umfangsrille 2 wegweisenden axialen Erstreckungsseite der Querrille 4 in radialer Richtung R des Fahrzeugluftreifens angehoben.

Die Querrillen 4 sind in einer Ausführung - wie beispielsweise in den Figuren 1 und 3 dargestellt - mit einer über die gesamte axiale Erstreckung der Querrillen innerhalb der Bodenaufstandsbreite T_{A} konstanten Rillenbreite B ausgebildet.

In einem anderen - beispielsweise in den Figuren 5 und 7 dargestellten - Ausführungsbeispiel sind die Querrillen 4 jeweils in der Position des Steges 5 mit einer maximalen Rillenbreite B ausgebildet. Ausgehend vom Steg 5 ist die Rillenbreite B in diesem Ausführungsbeispiel dabei zu beiden axialen Erstreckungsseiten des Steges 5 längs der axialen Erstreckung der Querrille 4 jeweils mit konstant abnehmender Rillenbreite ausgebildet.

### Bezugszeichenliste

### (Teil der Beschreibung)

- 1: Profilblockreihe
- 2: Umfangsrille
- 3: Umfangsrippe
- 4: Querrille
- 5: Steg
- 6: Profilblockelement
- 7: Rillengrund
- 8: Stegflanke
- 9: Stegflanke
- 10: Radial äußere Oberfläche
- 11: Abschnitt
- 12: Abschnitt
- 13: Abschnitt
- 14: Knickstelle

## Patentansprüche

1. Laufstreifenprofil eines Fahrzeugluftreifens mit wenigstens einer im Erstreckungsbereich einer Reifenschulter ausgebildeten, in Umfangsrichtung U des Fahrzeugluftreifens erstreckten Profilblockreihe (1), welche in axialer Richtung A zur Reifenäquatorebene (Ä-Ä) hin durch eine Umfangsrille (2) begrenzt und aus in Umfangsrichtung U hintereinander angeordneten, durch in die Umfangsrille (2) mündende Querrillen (4) voneinander beabstandeten Profilblockelementen (6) ausgebildet ist, die nach radial außen durch eine nach radial außen weisende, die Straßenkontaktoberfläche bildende Oberfläche (10) begrenzt werden,
wobei wenigstens in mehreren - insbesondere in allen - dieser Querrillen (4) jeweils innerhalb des in axialer Richtung A mittleren Drittels (12) des innerhalb der Bodenaufstandsbreite T_{A} des Fahrzeugluftreifens ausgebildeten axialen Erstreckungsbereichs der Querrille (4) jeweils ein Steg (5) ausgebildet ist, der sich quer zur Querrille (4) durch diese hindurch erstreckt und die beiden durch die Querrille (4) voneinander getrennten Profilblockelemente (6) miteinander verbindet, wobei sich der Steg (5) ausgehend von dem die Querrille (4) nach radial innen begrenzenden Rillengrund (7) nach radial außen bis zur radialen Position der durch die die beiden Profilblockelemente (6) nach radial außen begrenzenden Oberflächen (10) gebildeten Mantelfläche unter kontinuierlicher Verjüngung der Stegbreite erstreckt und dort endet,
**dadurch gekennzeichnet,**
**dass** die Stegbreite b₁ in der radialen Position durch die die beiden Profilblockelemente (6) nach radial außen begrenzenden Oberflächen (10) gebildeten Mantelfläche mit b₁ ≤ 0,8 B ausgebildet ist, wobei B die Breite der Querrille (4) beiderseits des Steges (5) in der radialen Position der die beiden Profilblockelemente (6) nach radial außen begrenzenden Oberfläche (10) bildet.

2. Laufstreifenprofil gemäß den Merkmalen von Anspruch 1,
wobei der Steg (5) zur einen Erstreckungsseite der Querrille (4) hin durch eine erste Stegflanke (8) und zur anderen Erstreckungsseite der Querrille (4) hin durch eine zweite Stegflanke (9) begrenzt wird, wobei sich beide Stegflanken (8,9) jeweils in Richtung quer zur Querrille (4) vom einen Profilblockelement (6) zum anderen Profilblockelement (6) und in radialer Richtung R ausgehend vom Rillengrund (7) bis zu der durch die die beiden Profilblockelemente (6) nach radial außen begrenzenden Oberflächen (10) gebildeten Mantelfläche unter konstanter Abnahme ihres Abstandes zueinander erstrecken.

3. Laufstreifenprofil gemäß den Merkmalen von Anspruch 2,
wobei die erste Stegflanke (8) jeweils in den senkrecht zu der in Erstreckungsrichtung des Steges (5) von Profilblockelement (6) zu Profilblockelement (6) ausgebildeten Schnittebenen einen Neigungswinkel β₁ mit 5°≤ β₁≤20° und die zweite Stegflanke (9) jeweils in den senkrecht zu der in Erstreckungsrichtung des Steges (5) von Profilblockelement (6) zu Profilblockelement (6) ausgebildeten Schnittebenen einen Neigungswinkel β₂ mit 5°≤ β₂≤20° zu einer in der jeweiligen Schnittebene an die durch die radial äußeren Oberflächen (10) der beiden Profilblockelemente (6) gebildeten Mantelfläche ausgebildeten Senkrechten (s₁, s₂), aufweist,
wobei insbesondere β₁= β₂ ausgebildet ist.

4. Laufstreifenprofil gemäß den Merkmalen von einem oder mehreren der vorangegangenen Ansprüche,
wobei der Steg (5) über seine gesamte radiale Erstreckung hinweg mit seiner von Profilblockelement (6) zu Profilblockelement (6) ausgebildeten Haupterstreckung durch die Querrille (4) hindurch unter Einschluss eines Winkels α mit 30°≤α≤ 60° zur Umfangsrichtung U des Fahrzeugluftreifens verlaufend ausgebildet ist.

5. Laufstreifenprofil gemäß den Merkmalen von einem oder mehreren der vorangegangenen Ansprüche,
wobei der Steg (5) in der Querrille (4) in einer Position einer - insbesondere der einzigen - Knickstelle (14) des Verlaufs der Querrille (4) ausgebildet ist.

6. Laufstreifenprofil gemäß den Merkmalen von einem oder mehreren der vorangegangenen Ansprüche,
wobei der Rillengrund (7) der Querrille (4) in dem in axialer Richtung A des Fahrzeugluftreifens vom Steg (5) zur Reifenäquatorebene Ä-Ä hinweisend ausgebildeten Erstreckungsabschnitt in einer gegenüber dem Rillengrund (7) in dem in axialer Richtung A des Fahrzeugluftreifens vom Steg (5) aus von der Reifenäquatorebene Ä-Ä wegweisend ausgebildeten Erstreckungsabschnitt erhöhten radialen Position ausgebildet ist.

## Claims

1. Tread profile of a pneumatic vehicle tyre having at least one profile block row (1) which is formed in the region of extent of a tyre shoulder and which extends in a circumferential direction U of the pneumatic vehicle tyre and which is delimited in an axial direction A toward the tyre equatorial plane (Ä-Ä) by a circumferential channel (2) and which is formed from profile block elements (6) which are arranged one behind the other in the circumferential direction U and which are spaced apart from one another by transverse channels (4) which open into the circumferential channel (2), which profile block elements are delimited in a radially outward direction by a radially outwardly pointing surface (10) which forms the road contact surface,
wherein, at least in several - in particular in all - of said transverse channels (4), in each case one web (5) is formed in each case within the middle third (12), in the axial direction A, of the axial region of extent of the transverse channel (4) formed within the ground contact patch width T_{A} of the pneumatic vehicle tyre, which web extends through the transverse channel (4) transversely with respect thereto and connects together the two profile block elements (6) that are separated from one another by the transverse channel (4), wherein, proceeding from the channel base (7) which delimits the transverse channel (4) in a radially inward direction, the web (5) extends radially outward, with a continuous narrowing of the web width, as far as the radial position of the shell surface formed by the surfaces (10) which delimit the two profile block elements (6) in a radially outward direction, and ends there,
**characterized**
**in that** the web width b₁ is, at the radial position of the shell surface formed by the surfaces (10) which delimit the two profile block elements (6) in a radially outward direction, dimensioned such that b₁ ≤ 0.8 B, wherein B is the width of the transverse channel (4) to both sides of the web (5) at the radial position of the surface (10) which delimits the two profile block elements (6) in a radially outward direction.

2. Tread profile according to the features of Claim 1,
wherein the web (5) is, towards one side of the extent of the transverse channel (4), delimited by a first web flank (8) and is, towards the other side of the extent of the transverse channel (4), delimited by a second web flank (9), wherein the two web flanks (8, 9) extend, with a continuous decrease of the spacing of said web flanks to one another, in each case in the direction transversely with respect to the transverse channel (4) from one profile block element (6) to the other profile block element (6) and in a radial direction R from the channel base (7) as far as the shell surface formed by the surfaces (10) which delimit the two profile block elements (6) in a radially outward direction.

3. Tread profile according to the features of Claim 2,
wherein the first web flank (8) has, in each case in the section planes perpendicular to the in the direction of extent of the web (5) from profile block element (6) to profile block element (6), an angle of inclination β₁, where 5°≤β₁≤20°, and the second web flank (9) has, in each case in the section planes perpendicular to the in the direction of extent of the web (5) from profile block element (6) to profile block element (6), an angle of inclination β₂, where 5°≤β₂≤20°, with respect to a perpendicular (s₁, s₂), in the respective section plane, with respect to the shell surface formed by the radially outer surfaces (10) of the two profile block elements (6),
wherein in particular, β₁ = β₂.

4. Tread profile according to the features of one or more of the preceding claims,
wherein the web (5) is, over its entire radial extent, formed so as to run, with its main extent formed from profile block element (6) to profile block element (6), through the transverse channel (4) so as to enclose an angle α with respect to the circumferential direction U of the pneumatic vehicle tyre, where 30°≤α≤60°.

5. Tread profile according to the features of one or more of the preceding claims,
wherein the web (5) is formed in the transverse channel (4) at a position of a - in particular of the single - bend (14) of the profile of the transverse channel (4).

6. Tread profile according to the features of one or more of the preceding claims,
wherein the channel base (7) of the transverse channel (4) in the section of extent pointing in the axial direction A of the pneumatic vehicle tyre from the web (5) towards the tyre equatorial plane Ä-Ä is formed in an elevated radial position in relation to the channel base (7) in the section of extent pointing in the axial direction A of the pneumatic vehicle tyre from the web (5) away from the tyre equatorial plane Ä-Ä.

## Revendications

1. Profil de bande de roulement pour bandage pneumatique de roue de véhicule,
présentant au moins une rangée (1) de blocs profilés formée dans la plage d'extension d'un épaulement du bandage de roue, s'étendant dans la direction périphérique U du bandage pneumatique pour roue de véhicule, délimitée dans la direction axiale A en direction du plan équatorial (Ä-Ä) du bandage de roue par une rainure périphérique (2) et formée d'éléments (6) de bloc profilé disposés les uns derrière les autres dans la direction périphérique U et séparés les uns des autres par des rainures transversales (4) qui débouchent dans la rainure périphérique (2), ces éléments étant délimités radialement vers l'extérieur par une surface (10) tournée radialement vers l'extérieur et formant la surface de contact avec la chaussée,
une nervure (5) qui s'étend transversalement par rapport à la rainure transversale (4), qui traverse cette dernière et qui relie mutuellement les deux éléments (6) de bloc profilé séparés l'un de l'autre par la rainure transversale (4) étant formée dans certaines de ces rainures transversales (4) et en particulier dans toutes ces rainures transversales situées à l'intérieur du tiers (12), situé au milieu dans la direction axiale A, de la plage d'extension axiale de la rainure transversale (4) de la largeur T_{A} d'appui au sol du bandage pneumatique pour roue de véhicule,
la nervure (5) s'étendant depuis le fond (7) qui délimite radialement vers l'intérieur la rainure transversale (4) jusqu'à la position radiale de la surface d'enveloppe formée par la surface (10) qui délimite radialement vers l'extérieur les deux éléments (6) de bloc profilé, la largeur de la nervure se rétrécissant de manière continue et la nervure se terminant sur la surface d'enveloppe,
**caractérisé en ce que**
dans la position radiale passant par la surface d'enveloppe formée par la surface (10) qui délimite radialement vers l'extérieur les deux éléments (6) de bloc profilé, la largeur b₁ de la nervure vérifie la relation b₁ ≤ 0,8 B, B étant la largeur de la rainure transversale (4) des deux côtés de la nervure (5) dans la position radiale de la surface (10) qui délimite radialement vers l'extérieur les deux éléments (6) de bloc profilé.

2. Profil de bande de roulement selon les caractéristiques de la revendication 1, dans lequel la nervure (5) est délimitée par un premier flanc (8) de nervure sur un côté de l'extension de la rainure transversale (4) et par un deuxième flanc (9) de nervure sur l'autre côté de l'extension de la rainure transversale (4), chacun des deux flancs (8, 9) de la nervure s'étendant avec une diminution constante de leur distance mutuelle dans la direction transversale par rapport à la rainure transversale (4), depuis un élément (6) de bloc profilé jusqu'à l'autre élément (6) de bloc profilé et dans la direction radiale R, partant du fond (7) de la rainure jusqu'à la surface d'enveloppe formée par la surface (10) qui délimite radialement vers l'extérieur les deux éléments (6) de bloc profilé.

3. Profil de bande de roulement selon les caractéristiques de la revendication 2, dans lequel dans le plan de coupe formé d'un élément (6) de bloc profilé à l'autre élément (6) de bloc profilé perpendiculairement à la dans la direction d'extension de la nervure (5), le premier flanc (8) de chaque nervure forme un angle d'inclinaison β₁, 5°≤ β₁ ≤ 20°, dans le plan de coupe formé d'un élément (6) de bloc profilé à l'autre élément (6) de bloc profilé perpendiculairement à la dans la direction de l'extension de la nervure (5), le deuxième flanc (9) de chaque nervure forme un angle d'inclinaison β₂, 5°≤ β₂ ≤ 20°, chaque fois par rapport à une perpendiculaire (s₁, s₂) formée dans chaque plan de coupe sur la surface d'enveloppe formée par la surface radialement extérieur (10) des deux éléments (6) de bloc profilé, et en particulier β₁ = β₂.

4. Profil de bande de roulement selon les caractéristiques d'une ou plusieurs des revendications précédentes, dans lequel sur toute son extension radiale, partant de son extension principale entre un élément (6) de bloc profilé et l'autre élément (6) de bloc profilé, et à travers la rainure transversale (4), la nervure (5) forme un angle α, 30°≤ α≤ 60°, par rapport à la direction périphérique U du bandage pneumatique pour roue de véhicule.

5. Profil de bande de roulement selon les caractéristiques d'une ou plusieurs des revendications précédentes, dans lequel la nervure (5) est formée dans la rainure transversale (4) en la position d'un coude (14) et éventuellement de l'unique coude de l'extension de la rainure transversale (4).

6. Profil de bande de roulement selon les caractéristiques d'une ou plusieurs des revendications précédentes, dans lequel dans la partie de l'extension formée dans la direction axiale A du bandage pneumatique pour roue de véhicule entre la nervure (5) et le plan équatorial Ä-Ä du bandage de roue, le fond (7) de la rainure transversale (4) présente une position radiale plus élevée par rapport au fond (7) de la rainure dans la partie de l'extension formée dans la direction axiale A du bandage pneumatique pour roue de véhicule non tournée vers la nervure (5) partant du plan équatorial Ä-Ä du bandage de roue.
